# EUROPEAN PATENT SPECIFICATION

(11) **EP 4 091 911 B1**
(45) Date of publication and mention of the grant of the patent: **06.05.2026**
(21) Application number: 22174278.6
(22) Date of filing: 19.05.2022
(51) Int. Cl.: B62D 15/02, B60Q 9/00, G01C 21/36, G06T 3/40

(54) **INTERACTION METHOD AND APPARATUS FOR AUTONOMOUS DRIVING**
INTERAKTIONSVERFAHREN UND VORRICHTUNG ZUM AUTONOMEN FAHREN
PROCÉDÉ D'INTERACTION ET APPAREIL DE CONDUITE AUTONOME

(30) Priority: 19.05.2021 CN 202110548548
(43) Date of publication of application: 23.11.2022
(73) Proprietor: Guangzhou Xiaopeng Motors Technology Co., Ltd., Guangzhou, Guangdong Province 510000 (CN)
(72) Inventor: RAO, Heng, Guangzhou (CN); YAN, Zhenjie, Guangzhou (CN); JIAN, Jia, Guangzhou (CN); DAI, Guanqi, Guangzhou (CN); SUN, Hongxiao, Guangzhou (CN); HU, Zhimiao, Guangzhou (CN); JIANG, Jialiang, Guangzhou (CN); LI, Liangyi, Guangzhou (CN)
(74) Representative: Ran, Handong

(56) References cited:
- EP-A1- 1 179 958
- EP-A1- 1 944 740
- EP-A1- 3 415 374
- CN-A- 111 762 101
- DE-A1- 102013 015 348

## Description

### Field of Invention

The present invention relates to the field of autonomous driving technologies, and in particular, to an interaction method and apparatus for autonomous driving.

### Background

In the field of autonomous driving technologies, automated parking is usually involved. Automated parking requires a user to drive a vehicle to the vicinity of an available parking space(s). Only when an available parking space is detected, the vehicle can be automatically parked into the available parking space. Such approaches have certain limitations.

DE 102013 015348 A1 shows the features of the preamble of claims 1 and 11 and discloses a method for driving a vehicle into a parking space in a parking zone, which includes determining surrounding data for the vehicle and identifying whether a parking zone is a home parking zone while the vehicle is approaching a parking space in the parking zone. The driving data determined at the identified home-parking zone is stored or actualized. Multiple trajectories (T1 to Tn) for the home-parking space (4H) of the home parking zone are determined and stored in a learning mode based on the surrounding data or the driving data. An independent claim is included for a device for operating a vehicle, particularly for approaching a parking space in a parking zone that is non-visible or distant from road by a vehicle.

EP 3 415 374 A1 discloses an information processing device and method for performing parking according to a desired parking method. For respective modes corresponding to parking methods of automatic parking that automatically parks a vehicle, the information processing device calculates respective required times until the automatic parking is completed, and controls displaying of the respective required times corresponding to the modes, thereby enabling to perform desired parking according to the required time until the automatic parking is completed. EP 1 179 958 A1 describes generation of a synthetic image viewed from a virtual point of view above a vehicle, using images captured by a plurality of cameras shooting surroundings of the vehicle. In the synthetic image, an illustration image or an actual image of the vehicle is displayed in a vehicle region in which the vehicle is present. The area around the vehicle that is not shot by any of the cameras is displayed as a blind spot region.

EP 1 944 740 A1 discloses a navigation device, which at a junction, such as an intersection point, offers to a driver an appropriate image of the vicinity of the junction which is required in turning right or left. A route search section searches for a route leading to a set destination. An imaging regulation setting section determines an imaging regulation of an imaging section at a junction which exists on the searched route. A distance calculation section calculates a distance between a position of a vehicle and the junction. A control section changes an image to be shown in an output device according to the calculated distance based on the determined imaging regulation.

### Summary of Invention

An interaction method and apparatus for autonomous driving are proposed to overcome or at least partially solve the foregoing problems. Aspects of the present invention are set out in the appended set of claims.

An interaction method for autonomous driving is provided, including:
providing to a user means for activating an autonomous driving mode, the means selected from different means based on whether a parking interface is activated, and activating the autonomous driving mode in response to confirmation from the user through the provided means;
following a pre-learned parking path during autonomous driving, and performing different interface display control in response to a scenario change to present information about the scenario change to the user; and
when a target parking space recorded in the parking path is reached, performing automated parking into the target parking space.

Optionally, said activating the autonomous driving mode in the different manners based on the activation state of the parking interface includes:
when the parking interface is not activated, presenting, on a display of an in-vehicle system, a visual element containing an indicator that an area where the autonomous driving is available has been entered, and pushing a voice message containing an indicator that the autonomous driving mode can be activated, so as to indicate to the user that the autonomous driving mode can be activated; and
activating the autonomous driving mode in response to action interaction with the visual element containing the indicator that the area where the autonomous driving is available has been entered, or in response to voice interaction with the voice message containing the indicator that the autonomous driving mode can be activated.

Optionally, said activating the autonomous driving mode in the different manners based on the activation state of the parking interface includes:
when the parking interface is activated, presenting an interface element for starting the autonomous driving in the parking interface to be in an operable state, so as to indicate the user that the autonomous driving mode can be activated; and
activating the autonomous driving mode in response to action interaction with the interface element for starting the autonomous driving.

Optionally, said activating the autonomous driving mode in the different manners based on the activation state of the parking interface includes:
when the parking interface is activated, presenting an interface element for remote parking in the parking interface when it is detected that a distance between a current vehicle and the target parking space is less than a preset distance, so as to indicate the user that the autonomous driving mode can be activated through the remote parking; and
in response to an operation on the interface element for remote parking, presenting a visual element containing a guide for the remote parking, and activating the autonomous driving mode through an operation performed on a vehicle key outside the vehicle.

Optionally, said performing the different interface display control in response to the scenario change to present information about the scenario change to the user includes:
when it is detected that the vehicle is about to drive on a curve, adjusting a display view of environment simulation display in an autonomous driving interface, so as to provide a view of the curve in an environment to the user.

Optionally, said performing the different interface display control in response to the scenario change to present information about the scenario change to the user includes:
when it is detected that the current vehicle is put into a reverse gear, displaying prominently a panoramic image view in the autonomous driving interface, so as to present surroundings of the current vehicle to the user in real time; and/or
when it is detected that the current vehicle is put into the reverse gear, presenting a simulation element for the current vehicle with an brake light being illuminated in the environment simulation display, so as to indicate the user that the current vehicle is reversing; and/or
when it is detected that the current vehicle is put into the reverse gear, adding a perception enhancement element for indicating a reverse direction to the simulation element for the current vehicle in the environment simulation display, and presenting a perception enhancement element for indicating a forward driving direction in the environment simulation display to be in an unavailable state, so as to present a driving direction of the current vehicle to the user.

Optionally, said performing the different interface display control in response to the scenario change to present information about the scenario change to the user includes:
when a road junction to be travelled through is detected, presenting, in the environment simulation display, a perception enhancement element for indicating a position of the road junction to be travelled through, so as to indicate to the user of the position of the road junction to be travelled through.

Optionally, said performing the different interface display control in response to the scenario change to present information about the scenario change to the user includes:
when an obstacle to be maneuvered around is detected, adjusting a perception enhancement element for guiding the vehicle in the environment simulation display, so as to provide the user with driving guidance against the obstacle; and/or
when an obstacle to be maneuvered around is detected, presenting a perception enhancement element for indicating the obstacle in the environment simulation display, so as to indicate to the user of a position of the obstacle.

Optionally, said performing the different interface display control in response to the scenario change to present information about the scenario change to the user includes:
when a park-in path to the target parking space is successfully generated, presenting, in the environment simulation display, a perception enhancement element for indicating a stopping position where the current vehicle is to be stopped, so as to indicate to the user of a target position where the current vehicle is to be stopped.

Optionally, the method further includes:
when the current vehicle is parked into the target parking space, presenting an overview map and accumulative driving information collected in the autonomous driving, so as to present information during operation in the autonomous driving mode to the user.

An interaction apparatus for autonomous driving is provided, including:
an autonomous driving mode activation module, configured to provide to a user means for activating an autonomous driving mode, the means selected from different means based on whether a parking interface is activated, and activating the autonomous driving mode in response to confirmation from the user through the provided means;
a scenario change feedback module, configured to, follow a pre-learned parking path during autonomous driving, and perform different interface display control in response to a scenario change to present information about the scenario change to the user; and
a parking module, configured to, when a target parking space recorded in the parking path is reached, perform automated parking into the target parking space.

A vehicle is provided, which includes a processor, a memory and a computer program stored on the memory and executable by the processor, wherein when executed by the processor, the computer program implements the interaction method for autonomous driving described above.

A computer readable storage medium is provided, wherein the computer readable storage medium has stored thereon a computer program that, when executed by a processor, implements the interaction method for autonomous driving described above.

The embodiments of the present invention have the following advantages:
In the embodiments of the present invention, an autonomous driving mode is activated in different manners based on an activation state of a parking interface. During autonomous driving following a pre-learned parking path, different interface display control is performed in response to a scenario change to present information about the scenario change to a user. When the vehicle reaches a target parking space recorded in the parking path, automated parking into the target parking space is performed. In this way, the vehicle is parked into the target parking space, thereby improving safety of the autonomous driving.

### Brief Description of Drawings

To more clearly illustrate the technical solutions of the present invention, accompanying drawings that to be used in description of the present invention will be briefly described below.
Fig. 1a is a flowchart of steps of an interaction method for autonomous driving according to an embodiment of the present invention;
Fig. 1b shows an interactive interface according to an embodiment of the present invention;
Fig. 2a is a flowchart of steps of another interaction method for autonomous driving according to an embodiment of the present invention;
Fig. 2b shows a card window on the desktop according to an embodiment of the present invention;
Fig. 2c shows another interactive interface according to an embodiment of the present invention;
Fig. 3a is a flowchart of steps of still another interaction method for autonomous driving according to an embodiment of the present invention;
Fig. 3b shows still another interactive interface according to an embodiment of the present invention;
Fig. 4a is a flowchart of steps of yet another interaction method for autonomous driving according to an embodiment of the present invention;
Fig. 4b shows yet another interactive interface according to an embodiment of the present invention;
Fig. 4c shows still yet another interactive interface according to an embodiment of the present invention;
Fig. 5a is a flowchart of steps of still yet another interaction method for autonomous driving according to an embodiment of the present invention;
Fig. 5b shows a further interactive interface according to an embodiment of the present invention;
Fig. 6a is a flowchart of steps of a further interaction method for autonomous driving according to an embodiment of the present invention;
Fig. 6b shows a still further interactive interface according to an embodiment of the present invention;
Fig. 7a is a flowchart of steps of a still further interaction method for autonomous driving according to an embodiment of the present invention;
Fig. 7b shows a yet further interactive interface according to an embodiment of the present invention;
Fig. 8a is a flowchart of steps of a yet further interaction method for autonomous driving according to an embodiment of the present invention;
Fig. 8b shows a still yet further interactive interface according to an embodiment of the present invention;
Fig. 9a is a flowchart of steps of a still yet further interaction method for autonomous driving according to an embodiment of the present invention;
Fig. 9b shows an even yet another interactive interface according to an embodiment of the present invention; and
Fig. 10 is a structural block diagram of an interaction apparatus for autonomous driving according to an embodiment of the present invention.

### Detailed Description

To make the objectives, features and advantages of the present invention more clearly understood, the present invention will be further described in detail below with reference to the accompanying drawings and specific implementations.

In practice, during autonomous driving of a current vehicle in a parking lot, automated parking can be started only until the current vehicle has detected a target parking space. The current vehicle cannot start the automated parking on a road section from the entrance of the parking lot to a target parking space that will be detected. Thus, the specific situation in this road section cannot be determined, resulting in relatively poor safety of the autonomous driving.

To improve safety of autonomous driving, the current vehicle can learn a parking path for the current vehicle to travel from the entrance of a parking lot to a target parking space. The learning process may be as follows: learning of the parking path is started after the vehicle enters the parking lot and/or before the target parking space is detected. Specifically, when the current vehicle travels to a designated location, learning of the parking path may be triggered. The current vehicle is controlled to drive to an area where a target parking space can be detected, and then be parked into the target parking space. Then, memory modeling is performed on a scenario related to the path. The learning of the parking path is then completed.

The present invention aims at the autonomous driving and the parking into the target parking space after the parking path learning is completed and the autonomous driving mode is activated.

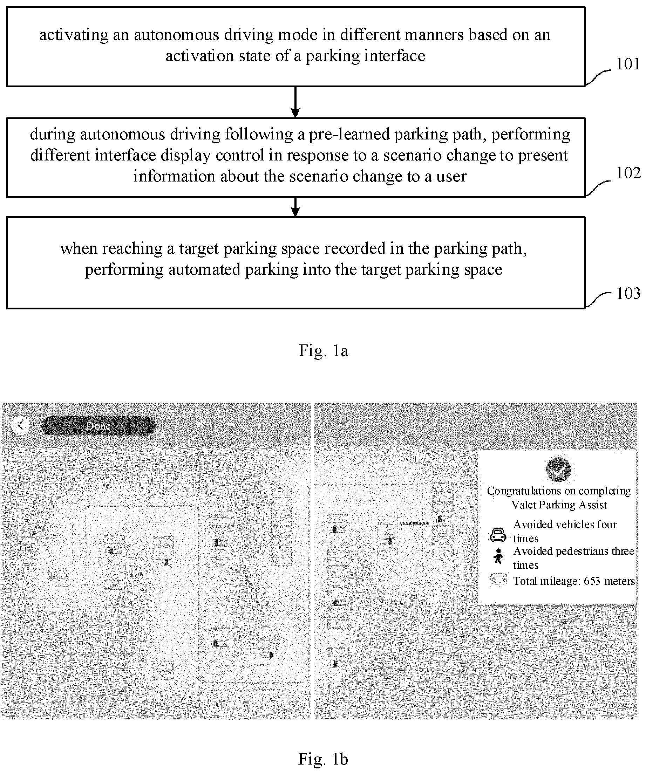

Fig. 1a is a flowchart of steps of an interaction method for autonomous driving according to an embodiment of the present invention, which may include the following steps 101 to 103.

At step 101, an autonomous driving mode is activated in different manners based on an activation state of a parking interface.

After a vehicle enters a parking lot, if the vehicle has pre-learned a parking path for a target parking space in the parking lot and has stored the parking path, the autonomous driving mode of the vehicle can be activated in different manners based on the activation state of the parking interface.

At step 102, during autonomous driving following a pre-learned parking path, different interface display control is performed in response to a scenario change, to present information about the scenario change to a user.

After the autonomous driving mode is activated, the vehicle may drive automatically following the pre-learned parking path. During the autonomous driving of the vehicle, different interface display control processes can be performed based on the scenario change during the driving.

Scenarios in the driving process may include, but are not limited to, the following scenarios where: the vehicle is driving to a curve or bend, the vehicle is put into the reverse gear in the driving, the vehicle is about to travel through a road junction, the vehicle has detected an obstacle to be maneuvered around, and the vehicle has travelled into a range within a preset distance from the target parking space.

At step 103, when reaching a target parking space recorded in the parking path, automated parking into the target parking space is performed.

When the vehicle travels along the parking path to the target parking space recorded in the parking path, the vehicle may be automatically parked into the target parking space, thereby completing this parking.

In an embodiment of the present invention, the method further includes:
when the current vehicle has been parked into the target parking space, presenting an overview map and accumulative driving information collected in the autonomous driving, so as to present information during operation in the autonomous driving mode to the user.

In an example, when the vehicle has been parked into the target parking space, a parking completion interface may be activated. This interface displays the overview map of the parking path by default. In addition, the interface may display accumulative driving information collected in the current autonomous driving process, including total mileage, the number of times of pedestrian avoidance, and the number of times of vehicle avoidance.

In the parking completion interface as shown in Fig. 1b, the overview map for the parking path is shown on the left of Fig. 1b, and an indicator "Congratulations on completing Valet Parking Assist" and accumulative driving information, including "Avoided vehicles 4 times", "Avoided pedestrians 3 times", and "Total mileage: 653 meters", are shown on the right of Fig. 1b. An interface element, i.e., a "Done" button, is presented at the top of Fig. 1b, which may be clicked by the user to return to a home page.

In the embodiments of the present invention, an autonomous driving mode is activated in different manners based on an activation state of a parking interface. During autonomous driving following a pre-learned parking path, different interface display control is performed in response to a scenario change, to present information about the scenario change to a user. When the vehicle drives to a target parking space recorded in the parking path, automated parking into the target parking space is performed. The vehicle is then parked into the target parking space, thereby improving safety of the autonomous driving.

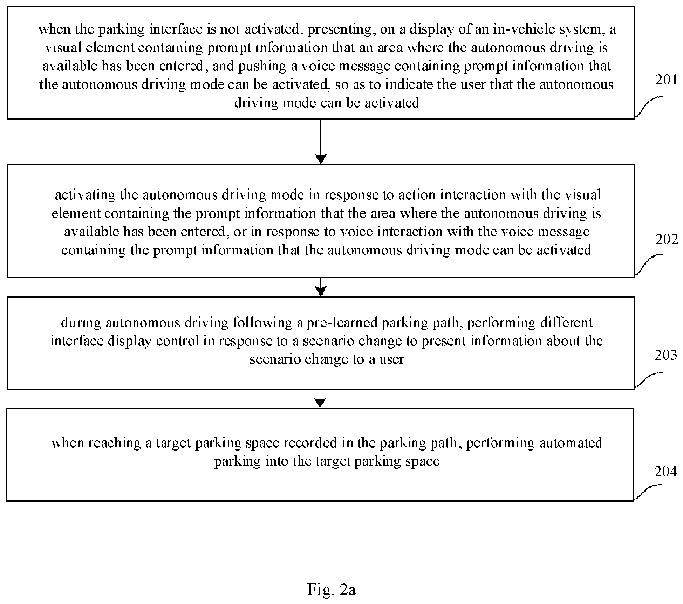

Fig. 2a is a flowchart of steps of another interaction method for autonomous driving according to an embodiment of the present invention, which may include the following steps 201 to 204.

At step 201, when the parking interface is not activated, a visual element containing an indicator that an area where the autonomous driving is available has been entered is presented on a display of an in-vehicle system; and a voice message containing an indicator that the autonomous driving mode can be activated is pushed, so as to indicate the user that the autonomous driving mode can be activated.

After the current vehicle has completed parking learning, when the current vehicle meets a trigger condition for autonomous driving, the visual element containing the indicator that the area where the autonomous driving is available has been entered, such as a desktop card, may be presented on the desktop of the display of the in-vehicle system.

In addition, the voice message containing the indicator that the autonomous driving mode can be activated may be pushed to the user, to indicate the user that the autonomous driving mode of the current vehicle can be activated.

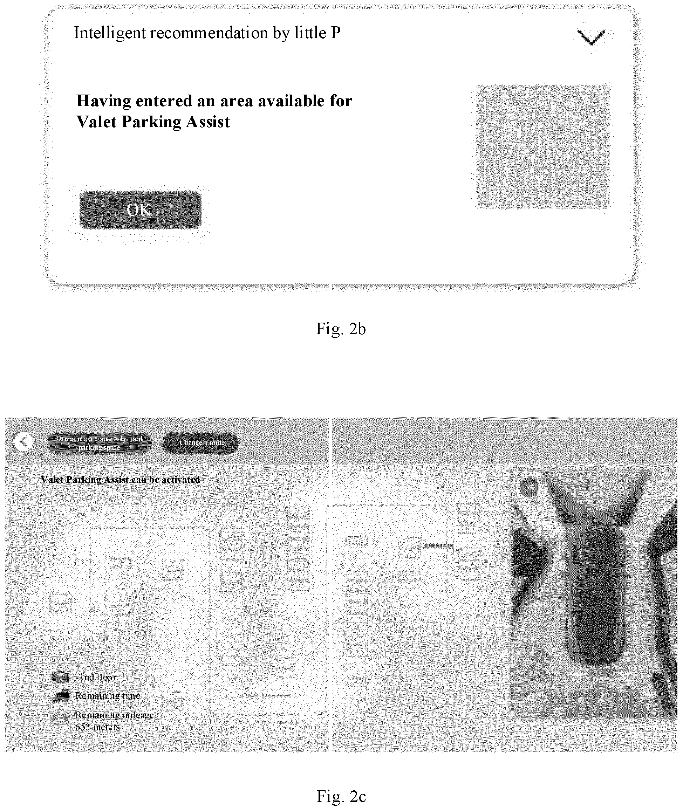

Fig. 2b shows a desktop card for prompting autonomous driving. The desktop card may include: information such as "Intelligent recommendation by Little P" indicating the recommender, recommended content "Having entered an area available for Valet Parking Assist", an interactive button "OK", and any other graphic text that may be shown on the desktop card.

At step 202, the autonomous driving mode is activated in response to action interaction with the visual element containing the indicator that the area where the autonomous driving is available has been entered, or in response to voice interaction with the voice message containing the indicator that the autonomous driving mode can be activated.

The user may perform action interaction with the visual element or perform voice interaction with the voice message, so as to activate the autonomous driving mode.

For example, if the user clicks the "OK" button in Fig. 2b as action interaction, it is determined that an operation for activating the autonomous driving mode by the user is detected. Alternatively, if the user says "OK" as a reply to a played voice message of "You can use Valet Parking Assist", it is determined that an operation for activating the autonomous driving mode by the user is detected.

After the user interacts with the current vehicle by the action interaction or the voice interaction, an interactive interface may be displayed as shown in Fig. 2c. The interactive interface includes a first control "Drive into a commonly used parking space" and a second control "Change a path" on the top. The interactive interface includes, in the lower part, an overview map of a parking path, information about a historically learned parking path (such as "-2nd floor", "Remaining time", and "Remaining mileage: 653 meters" as shown in Fig. 2c), and a panoramic view of the vehicle.

When the current vehicle meets an activation condition, the user may click the first control. The current vehicle may response an autonomous driving take-over prompt to the user, and starts autonomous driving, and the interactive interface may be switched to a driving interface. When the user clicks the second control, the path can be changed to learn a new parking path.

At step 203, during autonomous driving following a pre-learned parking path, different interface display control is performed in response to a scenario change, to present information about the scenario change to a user.

At step 204, when reaching a target parking space recorded in the parking path, automated parking into the target parking space is performed.

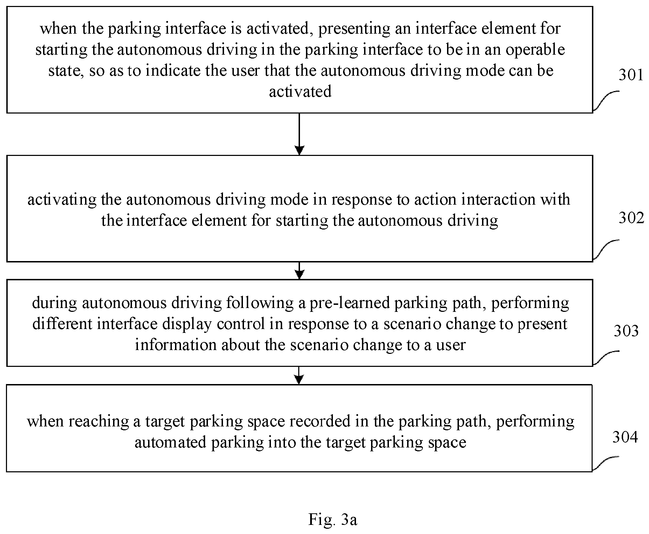

Fig. 3a is a flowchart of steps of another interaction method for autonomous driving according to an embodiment of the present invention, which may include the following steps 301 to 304.

At step 301, when the parking interface is activated, an interface element for starting the autonomous driving in the parking interface is presented to be in an operable state, so as to indicate the user that the autonomous driving mode can be activated.

When the vehicle enters the parking lot for which a parking path has been learned, after the parking interface is activated on a large-screen, an interface element for activating the autonomous driving mode is presented on the parking interface, with the interface element being in an operable state. The user can activate the autonomous driving mode by operating the interface element.

At step 302, the autonomous driving mode is activated in response to action interaction with the interface element for starting the autonomous driving.

The user may interact with the interface element, so that a preview map of the parking path is displayed on the interactive interface. The user may confirm the activation again in the interface, so that the autonomous driving mode can be activated.

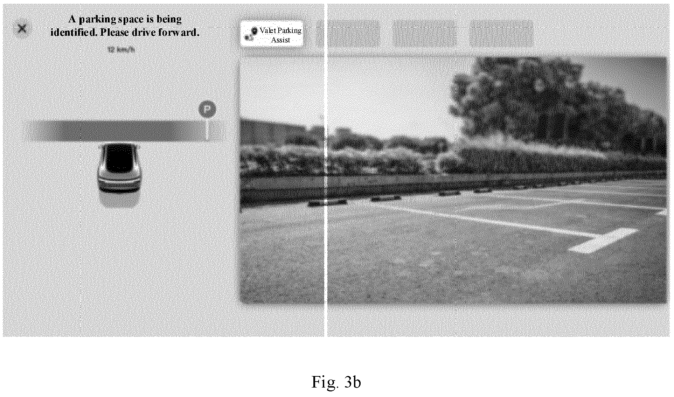

In a parking interface shown in Fig. 3b, an environment simulation display view is shown on the left of Fig. 3b, including a simulation element for the current vehicle and auxiliary elements including a parking lot mark, and a path guide. A panoramic image view is shown on the right of Fig. 3b, which includes a rearview image in this example. The figure shows, on the top, a prompt message "A parking space is being identified. Please drive forward", vehicle speed "12 km/h", and an interface element "Valet Parking Assist". This interface element may be used to start the parking path learning or activate the autonomous driving mode, and is currently highlighted in the figure indicating that the interface element is in an operable state.

If the current vehicle has pre-learned the parking path in the parking lot and stored the parking path, an operation is performed on the interface element "Valet Parking Assist" in Fig. 3b, the environment simulation display view on the left of Fig. 3b may be switched to a parking path preview as shown in Fig. 2c, and the panoramic image view on the right of Fig. 3b may be switched to a panoramic image view as shown in Fig. 2c. The panoramic image view as shown in Fig. 2c is composed of an omni-directional image in this example. The interactive interface shown in Fig. 2c further includes, on the top, a first control "Drive into a commonly used parking space" and a second control "Change a path". The interactive interface shown in Fig. 2c includes, in the lower part: an overview image of the parking path and information about a historically learned parking path (such as "-2nd floor", "Remaining time", and "Remaining mileage: 653 meters" shown in Fig. 2c).

When the user operates on the first control, it can be determined that the autonomous driving mode is activated, to start autonomous driving following the pre-learned parking path.

At step 303, during autonomous driving following a pre-learned parking path, different interface display control is performed in response to a scenario change to present information about the scenario change to a user.

At step 304, when reaching a target parking space recorded in the parking path, automated parking into the target parking space is performed.

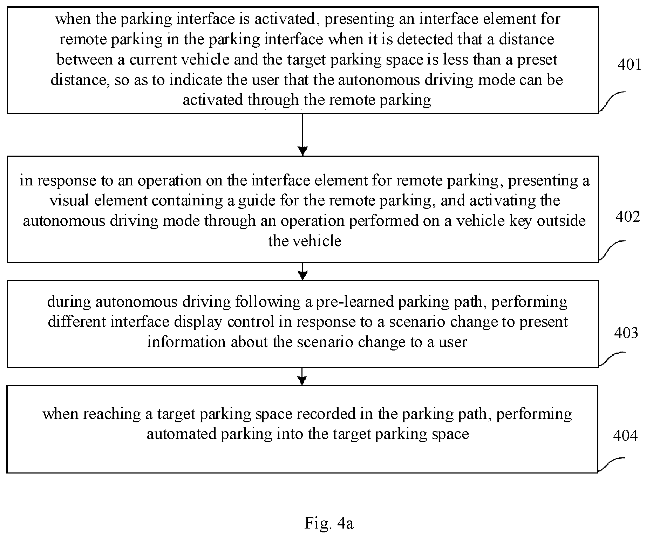

Fig. 4a is a flowchart of steps of still another interaction method for autonomous driving according to an embodiment of the present invention, which may include the following steps 401 to 404.

At step 401, when the parking interface is activated, presenting an interface element for remote parking in the parking interface when it is detected that a distance between a current vehicle and the target parking space is less than a preset distance, presenting an interface element for remote parking in the parking interface, so as to indicate the user that the autonomous driving mode can be activated through the remote parking.

When the parking interface is activated, when it is detected that a distance between a current vehicle and the target parking space is less than the preset distance, the interface element for the remote parking may be displayed on the parking interface to improve user experience in parking process. In the remote control parking, after getting off the vehicle, the user can control the vehicle to park into the target parking space by using a vehicle key or other remote control devices.

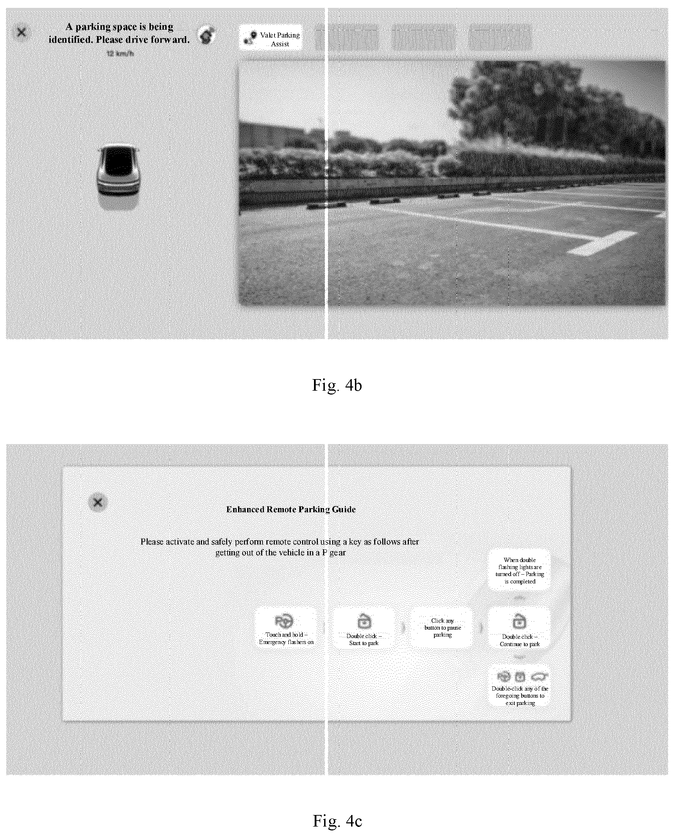

In an example, the parking interface in Fig. 4b on the left shows an environment simulation display view, and on the right, a panoramic image view, which is composed of a rearview image. Fig. 4b includes on the top a prompt message "A parking space is being identified. Please drive forward", vehicle speed "12 km/h", an interface element denoted as a remote control icon, and an interface element "Valet Parking Assist". The interface element denoted as the remote control icon is used for the user to start the remote parking, and the interface element "Valet Parking Assist" is used to start parking path learning or activate the autonomous driving mode.

At step 402, in response to an operation on the interface element for remote parking, a visual element containing a guide for the remote parking is presented, and the autonomous driving mode is activated through an operation performed on a vehicle key outside the vehicle.

When the user operates on the interface element for the remote parking, the guide for the remote parking may be presented to inform the user of how to perform the remote parking operation. The user can activate the autonomous driving mode by operating the vehicle key outside the vehicle.

The guide displayed in the interactive interface shown in Fig. 4c may show descriptions by graphics and text, including operation instructions such as "Touch and hold - Emergency flasher on", "Double click - Start to park", "Click any button to pause parking", "Double click - Continue parking", "When emergency flashers are turned off - Parking is completed", and "Double-click any of the above buttons to exit parking".

At step 403: in autonomous driving following a pre-learned parking path, performing different interface display control processing in response to a scenario change, to present information about the scenario change to a user.

At step 404, when reaching the target parking space recorded in the parking path, automated parking into the target parking space will be performed.

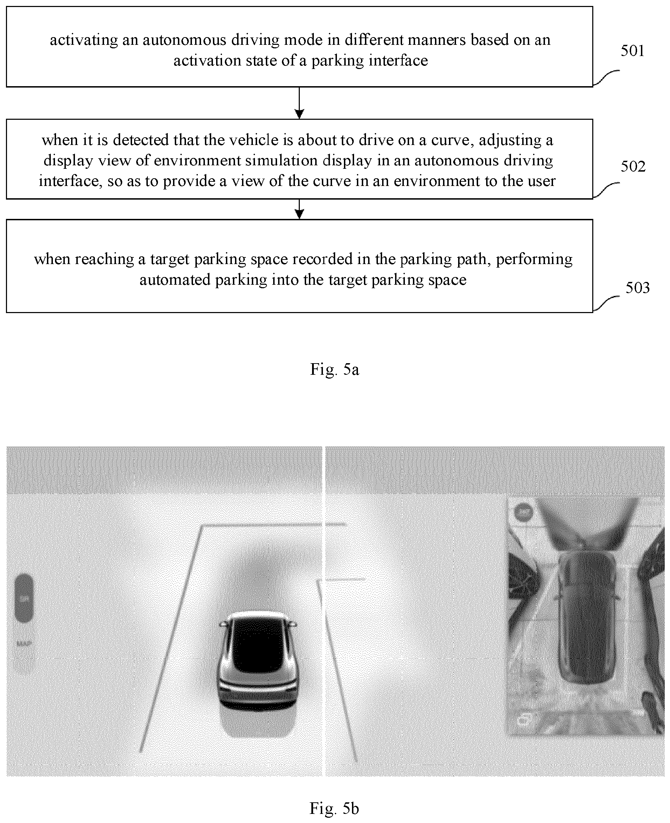

Fig. 5 is a flowchart of steps of yet another interaction method for autonomous driving according to an embodiment of the present invention, which may include the following steps 501 to 503.

At step 501, an autonomous driving mode is activated in different manners based on an activation state of a parking interface.

At step 502, when it is detected that the vehicle is about to drive on a curve, a display view of environment simulation display in an autonomous driving interface is adjusted, so as to provide a view of the curve in an environment to the user.

After the autonomous driving mode is activated, autonomous driving may be performed following the pre-learned parking path. During the autonomous driving, when it is detected that the vehicle is about to drive on a curve or bend, the vehicle may be controlled to decelerate and drive into the curve and the environment simulation displayed on the interactive interface may be adjusted, to ensure safety of the vehicle. Specifically, the scale or view angle of the display can be adjusted such that the vehicle body leans forward. After the vehicle passes through the curve, the adjusted display will be restored to the previous state.

In the interactive interface shown in Fig. 5b, an environment simulation display view is shown on the left, and a panoramic image view is shown on the right. In Fig. 5b, the panoramic image view is composed of an omni-directional image in this example.

The vehicle is driving onto the curve ahead. Therefore, in the environment simulation display view on the left of Fig. 5b, a path guide may be highlighted in front of the vehicle, a display view is scaled up, and the environment simulation elements are enlarged. In addition, the view angle is adjusted to keep the vehicle body tilting sideways. The scale is restored and the vehicle body is adjusted after the vehicle has travelled through the curve.

At step 503, when reaching a target parking space recorded in the parking path, automated parking into the target parking space is performed.

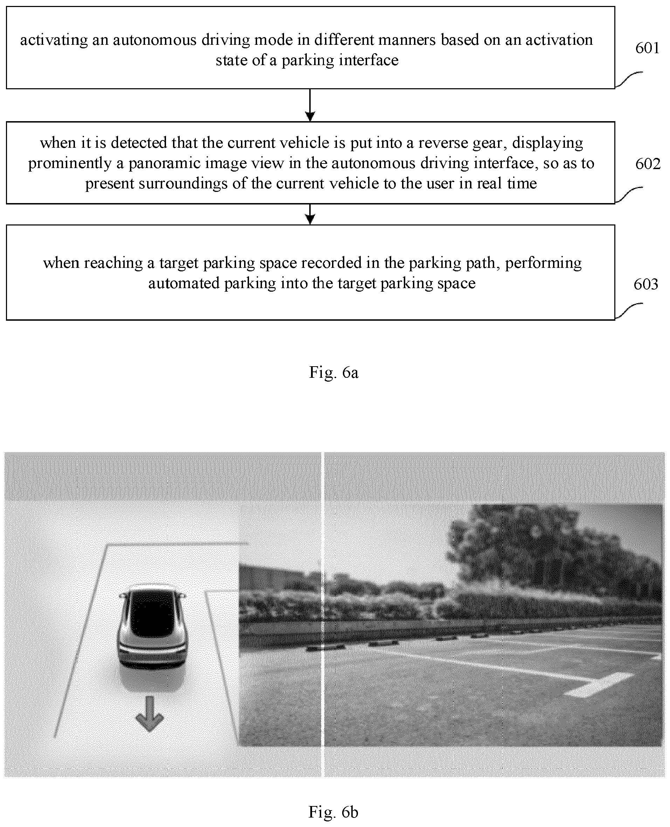

Fig. 6 is a flowchart of steps of still yet another interaction method for autonomous driving according to an embodiment of the present invention, which may include the following steps 601 to 603.

At step 601, an autonomous driving mode is activated in different manners based on an activation state of a parking interface.

At step 602, when it is detected that the current vehicle is put into a reverse gear, a panoramic image view is displayed prominently in the autonomous driving interface, so as to present surroundings of the current vehicle to the user in real time.

After the autonomous driving mode is activated, autonomous driving may be performed following the pre-learned parking path. During the autonomous driving, when the vehicle needs to reverse and is put into the reverse gear, a panoramic image view will be displayed on the interactive interface, so that the user can check the situation behind the vehicle.

It should be noted that when the vehicle is put into the reverse gear, the method may include one or more of the following operations:
when it is detected that the current vehicle is put into the reverse gear, presenting a simulation element for the current vehicle with an brake light being illuminated in the environment simulation display, so as to indicate the user that the current vehicle is reversing; and/or
when it is detected that the current vehicle is put into the reverse gear, adding a perception enhancement element for indicating a reverse direction to the simulation element for the current vehicle in the environment simulation display, and presenting a perception enhancement element for indicating a forward driving direction in the environment simulation display to be in an unavailable state, so as to present a driving direction of the current vehicle to the user.

The interactive interface shown in Fig. 6b shows an environment simulation display view on the left, and a panoramic image view on the right. In Fig. 6b, the panoramic image view is composed of a rear view. In this example, on the interactive interface, the vehicle is shown to have its rear brake light illuminated, and the forward guide on the left is not displayed or is dimmed (indicating an unavailable state), while a reverse indication is shown behind the vehicle ( a perception enhancement element for indicating a backward direction, denoted as an arrow in the figure).

It should be noted that the perception enhancement element is an element for enhancing user's perception in the environment simulation display, and may be presented in the environment simulation display, to assist the user to better perceive the environment information. The perception enhancement element is not an element corresponding to a real object in the environment simulation display. For example, a simulation element for an object is an element corresponding to the real object.

At step 603, when reaching a target parking space recorded in the parking path, automated parking into the target parking space is performed.

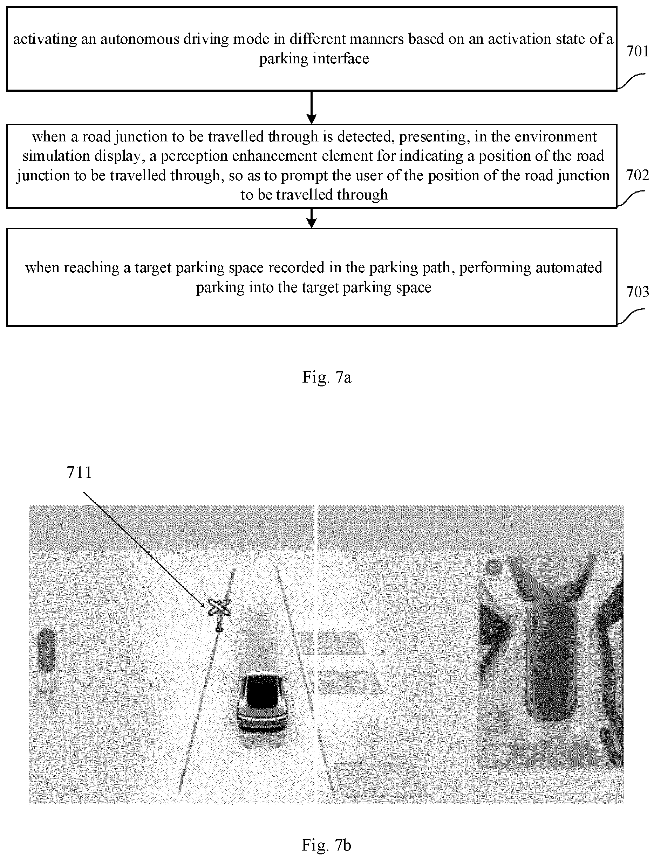

Fig. 7a is a flowchart of steps of a further interaction method for autonomous driving according to an embodiment of the present invention, which may include the following steps 701 to 703.

At step 701, an autonomous driving mode is activated in different manners based on an activation state of a parking interface.

At step 702, when a road junction to be travelled through is detected, a perception enhancement element for indicating a position of the road junction to be travelled through is presented in the environment simulation display, so as to indicate to the user of the position of the road junction to be travelled through.

The interactive interface shown in Fig. 7b shows an environment simulation display view on the left, and a panoramic image view is shown on the left, which is composed of an omni-directional image. There is a road junction in front of the vehicle, and a corresponding road junction mark 711 is displayed in the environment simulation display view. The road junction mark 711 is a perception enhancement element for indicating the position of the road junction through which the vehicle will travel.

At step 703, when reaching a target parking space recorded in the parking path, automated parking into the target parking space is performed.

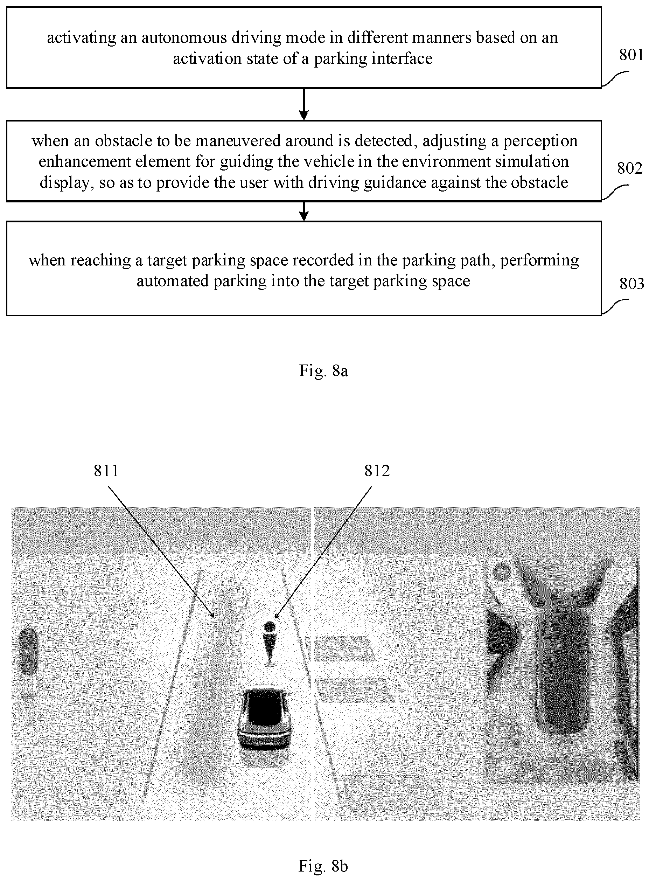

Fig. 8 is a flowchart of steps of a still further interaction method for autonomous driving according to an embodiment of the present invention, which may include the following steps 801 to 803.

At step 801, an autonomous driving mode is activated in different manners based on to an activation state of a parking interface.

At step 802, when an obstacle to be maneuvered around is detected, a perception enhancement element for guiding the vehicle in the environment simulation display is adjusted, so as to provide the user with driving guidance against the obstacle.

It should be noted that one or more of step 802 and the following step may be selected according to user requirements:
when an obstacle to be maneuvered around is detected, presenting a perception enhancement element for indicating the obstacle in the environment simulation display, so as to indicate to the user of a position of the obstacle.

The interactive interface shown in Fig. 8b shows on the left an environment simulation display view, and on the right a panoramic image view. In Fig. 8b, the panoramic image view is composed of an omni-directional image. When an obstacle is in front of the vehicle, an obstacle mark 812 may be shown in the left of the interface, and a driving guide line 811 for the vehicle in the environment simulation display may be adjusted. The driving guide line 811 is a perception enhancement element for guiding the driving, and the obstacle mark 812 is a perception enhancement element for indicating the obstacle.

At step 803, when reaching a target parking space recorded in the parking path, automated parking into the target parking space is performed.

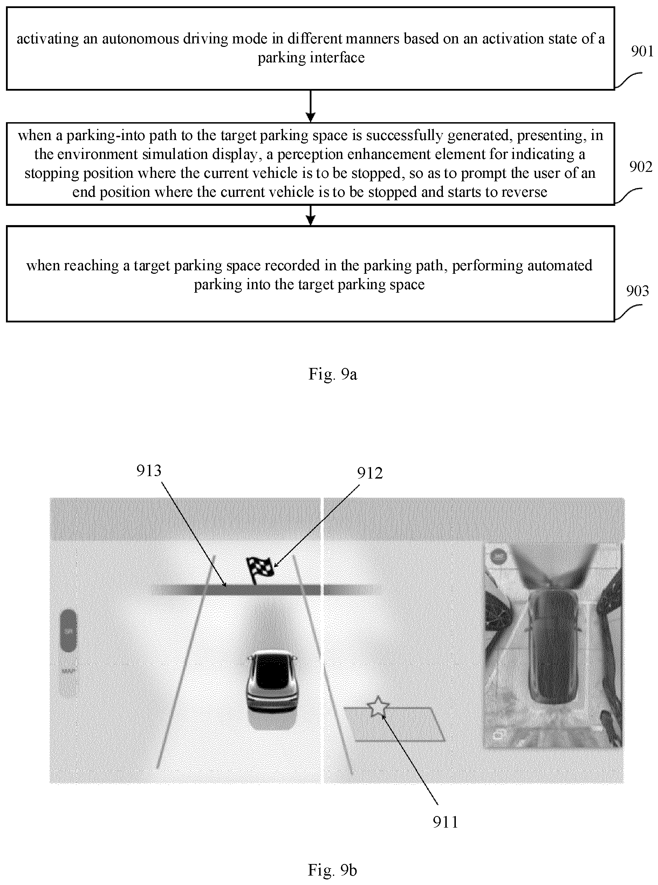

Fig. 9 is a flowchart of steps of a yet further interaction method for autonomous driving according to an embodiment of the present invention, which may include the following steps 901 to 903.

At step 901, an autonomous driving mode is activated in different manners based on an activation state of a parking interface.

At step 902, when a park-in path to the target parking space is successfully generated, a perception enhancement element for indicating a stopping position where the current vehicle is to be stopped is presented in the environment simulation display, so as to indicate to the user of a target position where the current vehicle is to be stopped.

After the autonomous driving mode is activated, autonomous driving may be performed following the pre-learned parking path. During autonomous driving, the vehicle can detect the target parking space recorded in the parking path when driving to a range within a preset distance to the target parking space. The vehicle can then determine whether an object is located in the target parking space. When no object is present in the target parking space, it is determined that the target parking space is available.

When the target parking space is available, a park-in path for the target parking space may be generated. The park-in path is a path of a relatively short distance from a parking start point to the target parking space, and may be used for automatic parking of the current vehicle.

After the park-in path is generated, in the environment simulation display view, a perception enhancement element for identifying a stopping position for the current vehicle to be stopped may be presented at the start position of the park-in path. Specifically, a stopping point mark and a stopping point guide line indicating the furthest point where the vehicle will be stopped and start to reverse may be added to the start position of the park-in path. The start position of the park-in path may be the target position of the parking path learned by Valet Parking Assist (VPA).

In the interactive interface shown in Fig. 9b, an environment simulation display view is shown on the left, which includes a simulation element for the current vehicle, an simulation element for the target parking space, a star 911 (a perception enhancement element indicating the target parking space) displayed on the target parking space, a stopping point mark 912 (a flag in the figure, i.e., a perception enhancement element indicating the stopping position of the current vehicle) for the parking path, and a stopping point guide line 913 (a line at the flag in the figure, i.e., another perception enhancement element indicating the stopping position of the current vehicle). On the right side of Fig. 9b, a panoramic image view is shown, which is composed of an omni-directional image. The interactive interface shown in Fig. 9b further includes an interface element (an SR-MAP switch button) for switching between the environment simulation display view (SR) and the overview map (MAP).

At step 903: when reaching the target parking space recorded in the parking path, automated parking into the target parking space is performed.

It should be noted that for ease of illustration, the method embodiments are expressed as a series of actions. However, but a person skilled in the art should appreciate that the embodiments of the present invention are not limited by the described action sequence, because some steps may be performed in other sequences or simultaneously. The person skilled in the art should also understand that the embodiments described herein are preferred embodiments, and that the actions involved are not necessarily all required for embodiments of the present invention.

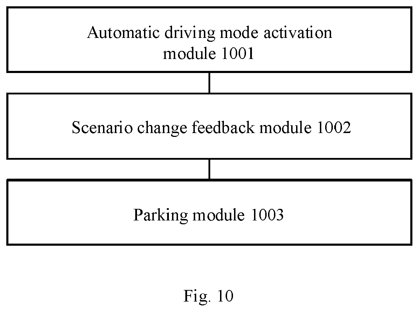

Fig. 10 is a schematic structural diagram of an interaction apparatus for autonomous driving according to an embodiment of the present invention, which may include the following modules:
an autonomous driving mode activation module 1001, configured to activate an autonomous driving mode in different manners based on an activation state of a parking interface;
a scenario change feedback module 1002, configured to, during autonomous driving following a pre-learned parking path, perform different interface display control in response to a scenario change, to present information about the scenario change to a user; and
a parking module 1003, configured to, when reaching a target parking space recorded in the parking path, perform automated parking into the target parking space.

In an embodiment of the present invention, the autonomous driving mode activation module 1001 includes:
a first activation feedback submodule, configured to, when the parking interface is not activated, present, on a display of an in-vehicle system, a visual element containing an indicator that an area where the autonomous driving is available has been entered, and push a voice message containing an indicator that the autonomous driving mode can be activated, so as to indicate the user that the autonomous driving mode can be activated; and
a first activation submodule, configured to activate the autonomous driving mode in response to action interaction with the visual element containing the indicator that the area where the autonomous driving is available has been entered, or in response to voice interaction with the voice message containing the indicator that the autonomous driving mode can be activated.

In an embodiment of the present invention, the autonomous driving mode module 1001 includes:
a second activation feedback submodule, configured to, when the parking interface is activated, present an interface element for starting the autonomous driving in the parking interface to be in an operable state, so as to indicate the user that the autonomous driving mode can be activated; and
a second activation submodule, configured to activate the autonomous driving mode in response to action interaction with the interface element for starting the autonomous driving.

In an embodiment of the present invention, the autonomous driving mode module 1001 includes:
a third activation feedback submodule, configured to, when the parking interface is activated, present an interface element for remote parking in the parking interface when it is detected that a distance between a current vehicle and the target parking space is less than a preset distance, so as to indicate the user that the autonomous driving mode can be activated through the remote parking; and
a third activation submodule, configured to, in response to an operation on the interface element for remote parking, present a visual element containing a guide for the remote parking, and activate the autonomous driving mode through an operation performed on a vehicle key outside the vehicle.

In an embodiment of the present invention, the scenario change feedback module 1002 includes:
a curve feedback submodule, configured to, when it is detected that the vehicle is about to drive on a curve, adjust a display view of environment simulation display in an autonomous driving interface, so as to provide a view of the curve in an environment to the user.

In an embodiment of the present invention, the scenario change feedback module 1002 includes:
a real-time environment feedback submodule, configured to, when it is detected that the current vehicle is put into a reverse gear, display prominently a panoramic image view in the autonomous driving interface, so as to present surroundings of the current vehicle to the user in real time; and/or
a reversing state feedback submodule, configured to, when it is detected that the current vehicle is put into the reverse gear, present an simulation element for the current vehicle with an brake light being illuminated in the environment simulation display, so as to indicate the user that the current vehicle is reversing; and/or
a driving direction feedback submodule, configured to, when it is detected that the current vehicle is put into the reverse gear, add a perception enhancement element for indicating a reverse direction to the simulation display element for the current vehicle in the environment simulation display, and present a perception enhancement element for indicating a forward driving direction in the environment simulation display to be in an unavailable state, so as to present a driving direction of the current vehicle to the user.

In an embodiment of the present invention, the scenario change feedback module 1002 may include:
a road junction position feedback submodule, configured to, when a road junction to be travelled through is detected, present, in the environment simulation display, a perception enhancement element for indicating a position of the road junction to be travelled through, so as to indicate to the user of the position of the road junction to be travelled through.

In an embodiment of the present invention, the scenario change feedback module 1002 may include:
a driving guidance information feedback submodule, configured to, when an obstacle to be maneuvered around is detected, adjust a perception enhancement element for guiding the vehicle in the environment simulation display, so as to provide the user with driving guidance against the obstacle; and/or
an obstacle position feedback submodule, configured to, when an obstacle to be maneuvered around is detected, present a perception enhancement element for indicating the obstacle in the environment simulation display, so as to indicate to the user of a position of the obstacle.

In an embodiment of the present invention, the scenario change feedback module 1002 includes:
a target position feedback submodule, configured to, when a park-in path to the target parking space is successfully generated, present, in the environment simulation display, a perception enhancement element for indicating a stopping position where the current vehicle is to be stopped, so as to indicate to the user of a target position where the current vehicle is to be stopped.

In an embodiment of the present invention, the apparatus further includes:
an application process feedback submodule, configured to, when the current vehicle has been parked into the target parking space, present an overview map and accumulative driving information collected in the autonomous driving, so as to present information during operation in the autonomous driving mode to the user.

In the embodiments of the present invention, an autonomous driving mode is activated in different manners based on an activation state of a parking interface. During autonomous driving following a pre-learned parking path, different interface display control is performed in response to a scenario change, to present information about the scenario change to a user. When the vehicle drives to a target parking space recorded in the parking path, automated parking into the target parking space is performed. The vehicle is then parked into the target parking space, thereby improving safety of the autonomous driving.

An embodiment of the present invention further provides a vehicle, which may include a processor, a memory and a computer program stored on the memory and executable by the processor, wherein when executed by the processor, the computer program implements the interaction method for autonomous driving described above.

An embodiment of the present invention further provides a computer readable storage medium having stored thereon a computer program that, when executed by a processor, implements the interaction method based on autonomous driving described above.

Since the apparatus embodiment is substantially similar to the method embodiment, the description is relatively simple. For relevant parts, reference may be made to the description of the method embodiment.

The embodiments in this specification are described in a progressive manner, and the description of each embodiment focuses on differences from other embodiments. Mutual reference may be made for the same and similar parts of the embodiments.

A person skilled in the art should understand that an embodiment of the present invention may be provided as a method, an apparatus, or a computer program product. Therefore, an embodiment of the present invention may be in the form of a full-hardware embodiment, a full-software embodiment, or an embodiment combining software and hardware aspects. In addition, an embodiment of the present invention may be in the form of a computer program product implemented on one or more computer usable storage media (including, but not limited to, a disk storage, a CD-ROM and an optical memory) containing computer usable program code.

Embodiments of the present invention are described with reference to flowcharts and/or block diagrams of a method, a terminal device (system), and a computer program product according to embodiments of the present invention. It should be understood that each flow and/or block in the flowcharts and/or the block diagrams, and combinations of flows and/or blocks in the flowcharts and/or the block diagrams, may be implemented by computer program instructions. These computer program instructions may be provided to a processor of a general purpose computer, a special purpose computer, an embedded processor or other programmable data processing terminal devices to produce a machine, so that the instructions executed by a processor of a computer or other programmable data processing terminal device are used to produce an apparatus for implementing functions specified in one or more flows of the flowcharts and/or one or more blocks of the block diagrams.

These computer program instructions may alternatively be stored in a computer readable memory capable of guiding a computer or other programmable data processing terminal devices to operate in a specific manner, so that the instructions stored in the computer readable memory are used to produce a product including an instruction apparatus, and the instruction apparatus implements functions specified in one or more flows of the flowcharts and/or one or more blocks of the block diagrams.

These computer program instructions may alternatively be loaded on a computer or other programmable data processing terminal devices, so that a series of operation steps are performed on the computer or other programmable terminal devices to produce computer-implemented processing, and therefore the instructions executed on the computer or other programmable terminal devices are used to provide steps for implementing functions specified in one or more flows of the flowcharts and/or one or more blocks of the block diagrams. The appended claims are intended to be construed to include the preferred embodiments as well as all changes and modifications that fall within the scope of the embodiments of the present invention.

Finally, it should be further noted that herein, relational terms such as "first" and "second" are used only to distinguish one entity or operation from another, and do not necessarily require or imply that any such actual relationship or sequence exists between these entities or operations. In addition, the term "including", "comprising" or any other variant thereof is intended to cover non-exclusive inclusion, so that a process, method, article or terminal device including a series of elements includes not only those elements, but also other elements not explicitly listed, or elements inherent to such a process, method, article or terminal device. Without further limitation, the element defined by the sentence "including a..." does not exclude that other identical elements are also present in the process, method, article or terminal device including the elements.

Detailed descriptions of the interaction method and apparatus based on autonomous driving are provided above, and specific examples are applied herein to illustrate the principle and implementations of the present invention. The descriptions of the foregoing embodiments are provided only to help understand the method and core idea of the present invention.

## Claims

1. An interaction method for autonomous driving, **characterized by**:
providing to a user means for activating an autonomous driving mode, the means selected from different means based on whether a parking interface is activated, and activating the autonomous driving mode in response to confirmation from the user through the provided means (101);
following a pre-learned parking path during autonomous driving, and performing different interface display control in response to a scenario change to present information about the scenario change to the user (102); and
when a target parking space recorded in the parking path is reached, performing automated parking into the target parking space (103).

2. The method of claim 1, wherein said activating the autonomous driving mode (101) comprises:
when the parking interface is not activated, presenting, on a display of an in-vehicle system, a visual element containing an indicator that an area where the autonomous driving is available has been entered, and pushing a voice message containing an indicator that the autonomous driving mode can be activated, so as to indicate to the user that the autonomous driving mode can be activated (201); and
activating the autonomous driving mode in response to action interaction with the visual element containing the indicator that the area where the autonomous driving is available has been entered, or in response to voice interaction with the voice message containing the indicator that the autonomous driving mode can be activated (202).

3. The method of claim 1, wherein said activating the autonomous driving mode (101) comprises:
when the parking interface is activated, presenting an interface element for starting the autonomous driving in the parking interface to be in an operable state, so as to indicate to the user that the autonomous driving mode can be activated (301); and
activating the autonomous driving mode in response to action interaction with the interface element for starting the autonomous driving (302).

4. The method of claim 1, wherein said activating the autonomous driving mode (101) comprises:
when the parking interface is activated, presenting an interface element for remote parking in the parking interface when it is detected that a distance between a current vehicle and the target parking space is less than a preset distance, so as to indicate to the user that the autonomous driving mode can be activated through the remote parking (401); and
in response to an operation on the interface element for remote parking, presenting a visual element containing a guide for the remote parking, and activating the autonomous driving mode through an operation performed on a vehicle key outside the vehicle (402).

5. The method of any of claims 1 to 4, wherein said performing the different interface display control in response to the scenario change to present information about the scenario change to the user (102) comprises:
when it is detected that the vehicle is about to drive on a curve, adjusting a display view of environment simulation display in an autonomous driving interface, so as to provide a view of the curve in an environment to the user (502).

6. The method of any of claims 1 to 4, wherein said performing the different interface display control in response to the scenario change to present information about the scenario change to the user (102) comprises:
when it is detected that the current vehicle is put into a reverse gear, displaying prominently a panoramic image view in the autonomous driving interface, so as to present surroundings of the current vehicle to the user in real time (602); and/or
when it is detected that the current vehicle is put into the reverse gear, presenting a simulation element for the current vehicle with a brake light being illuminated in the environment simulation display, so as to indicate to the user that the current vehicle is reversing; and/or
when it is detected that the current vehicle is put into the reverse gear, adding a perception enhancement element for indicating a reverse direction to the simulation element for the current vehicle in the environment simulation display, and presenting a perception enhancement element for indicating a forward driving direction in the environment simulation display to be in an unavailable state, so as to present a driving direction of the current vehicle to the user.

7. The method of any of claims 1 to 4, wherein said performing the different interface display control in response to the scenario change to present information about the scenario change to the user (102) comprises:
when a road junction to be travelled through is detected, presenting, in the environment simulation display, a perception enhancement element for indicating a position of the road junction to be travelled through, so as to indicate to the user of the position of the road junction to be travelled through (702).

8. The method of any of claims 1 to 4, wherein said performing the different interface display control in response to the scenario change to present information about the scenario change to the user (102) comprises:
when an obstacle to be maneuvered around is detected, adjusting a perception enhancement element for guiding the vehicle in the environment simulation display, so as to provide the user with driving guidance against the obstacle (802); and/or
when an obstacle to be maneuvered around is detected, presenting a perception enhancement element for indicating the obstacle in the environment simulation display, so as to indicate to the user of a position of the obstacle.

9. The method of any of claim 1 to 4, wherein said performing the different interface display control in response to the scenario change to present information about the scenario change to the user (102) comprises:
when a park-in path to the target parking space is successfully generated, presenting, in the environment simulation display, a perception enhancement element for indicating a stopping position where the current vehicle is to be stopped, so as to indicate to the user of a target position where the current vehicle is to be stopped (902).

10. The method of claim 1, further comprising:
when the current vehicle has been parked into the target parking space, presenting an overview map and accumulative driving information collected in the autonomous driving, so as to present information during operation in the autonomous driving mode to the user.

11. An interaction apparatus for autonomous driving, **characterized by**:
an autonomous driving mode activation module (1001), configured to provide to a user means for activating an autonomous driving mode, the means selected from different means based on whether a parking interface is activated, and activate the autonomous driving mode in response to confirmation from the user through the provided means (101);
a scenario change feedback module (1002), configured to follow a pre-learned parking path during autonomous driving, and perform different interface display control in response to a scenario change to present information about the scenario change to the user (102); and
a parking module (1003), configured to, when a target parking space recorded in the parking path is reached, perform automated parking into the target parking space (103).

12. A vehicle, comprising:
a processor,
a memory, and
a computer program stored on the memory and executable by the processor that, when executed by the processor, implements the interaction method for autonomous driving of any of claims 1-10.

13. A computer readable storage medium having stored thereon a computer program that, when executed by a processor, implements the interaction method for autonomous driving of any of claims 1-10.

## Patentansprüche

1. Interaktionsverfahren für autonomes Fahren, **gekennzeichnet durch**:
Bereitstellen, einem Benutzer, eines Mittels zum Aktivieren eines autonomen Fahrmodus, wobei das Mittel ausgewählt wird aus verschiedenen Mitteln auf der Basis davon, ob eine Parkschnittstelle aktiviert ist, und Aktivieren des autonomen Fahrmodus als Reaktion auf eine Bestätigung vom Benutzer über das bereitgestellte Mittel (101);
Folgen einem zuvor erlernten Einparkweg während des autonomen Fahrens und Ausführen einer anderen Schnittstellenanzeigesteuerung als Reaktion auf einen Szenenwechsel, um dem Benutzer Informationen über den Szenenwechsel zu präsentieren (102); und
Ausführen von automatisiertem Einparken in die Zielparklücke, wenn eine in dem Einparkweg aufgezeichnete Zielparklücke erreicht ist (103).

2. Verfahren nach Anspruch 1, wobei das genannte Aktivieren des autonomen Fahrmodus (101) Folgendes beinhaltet:
Präsentieren, wenn die Parkschnittstelle nicht aktiviert ist, eines visuellen Elements auf einem Display eines Fahrzeugsystems, das einen Indikator enthält, dass in einen Bereich, in dem autonomes Fahren verfügbar ist, eingetreten wurde, und Pushen einer Sprachmeldung, die einen Indikator enthält, dass der autonome Fahrmodus aktiviert werden kann, um dem Benutzer anzuzeigen, dass der autonome Fahrmodus aktiviert werden kann (201); und
Aktivieren des autonomen Fahrmodus als Reaktion auf eine Aktionsinteraktion mit dem visuellen Element, das den Indikator enthält, dass in den Bereich, in dem das autonome Fahren verfügbar ist, eingetreten wurde, oder als Reaktion auf eine Sprachinteraktion mit der Sprachmeldung, die den Indikator enthält, dass der autonome Fahrmodus aktiviert werden kann (202).

3. Verfahren nach Anspruch 1, wobei das genannte Aktivieren des autonomen Fahrmodus (101) Folgendes beinhaltet:
Präsentieren, wenn die Parkschnittstelle aktiviert ist, eines Schnittstellenelements zum Bringen des autonomen Fahrens in der Parkschnittstelle in einen betriebsbereiten Zustand, um dem Benutzer anzuzeigen, dass der autonome Fahrmodus aktiviert werden kann (301); und
Aktivieren des autonomen Fahrmodus als Reaktion auf eine Aktionsinteraktion mit dem Schnittstellenelement zum Starten des autonomen Fahrens (302).

4. Verfahren nach Anspruch 1, wobei das genannte Aktivieren des autonomen Fahrmodus (101) Folgendes beinhaltet:
Präsentieren, wenn die Parkschnittstelle aktiviert ist, eines Schnittstellenelements zum Ferneinparken in der Parkschnittstelle, wenn erkannt wird, dass eine Entfernung zwischen einem aktuellen Fahrzeug und dem Zielparkplatz kleiner ist als eine voreingestellte Entfernung, um dem Benutzer anzuzeigen, dass der autonome Fahrmodus durch das Ferneinparken aktiviert werden kann (401); und
Präsentieren, als Reaktion auf eine Betätigung des Schnittstellenelements zum Ferneinparken, eines visuellen Elements mit einer Anleitung für Ferneinparken und Aktivieren des autonomen Fahrmodus durch eine Betätigung eines Fahrzeugschlüssels außerhalb des Fahrzeugs (402).

5. Verfahren nach einem der Ansprüche 1 bis 4, wobei das genannte Ausführen der anderen Schnittstellenanzeigesteuerung als Reaktion auf den Szenenwechsel, um dem Benutzer Informationen über den Szenenwechsel zu präsentieren (102), Folgendes beinhaltet:
Justieren, wenn erkannt wird, dass das Fahrzeug kurz vor dem Fahren einer Kurve ist, einer Display-Ansicht eines Umgebungssimulationsdisplay in einer autonomen Fahrschnittstelle, um dem Benutzer eine Ansicht der Kurve in einer Umgebung bereitzustellen (502).

6. Verfahren nach einem der Ansprüche 1 bis 4, wobei das genannte Durchführen der anderen Schnittstellenanzeigesteuerung als Reaktion auf den Szenenwechsel, um dem Benutzer Informationen über den Szenenwechsel zu präsentieren (102), Folgendes beinhaltet:
prominentes Anzeigen, wenn erkannt wird, dass das aktuelle Fahrzeug in den Rückwärtsgang geschaltet wird, einer Panorama-Bildansicht in der autonomen Fahrschnittstelle, um dem Benutzer in Echtzeit die Umgebung des aktuellen Fahrzeugs zu präsentieren (602); und/oder
Präsentieren, wenn erkannt wird, dass das aktuelle Fahrzeug in den Rückwärtsgang geschaltet wird, eines Simulationselements für das aktuelle Fahrzeug mit einer leuchtenden Bremsleuchte im Umgebungssimulationsdisplay, um dem Benutzer anzuzeigen, dass das aktuelle Fahrzeug rückwärts fährt; und/oder
Hinzufügen, wenn erkannt wird, dass das aktuelle Fahrzeug in den Rückwärtsgang geschaltet wird, eines Wahrnehmungsverbesserungselements zum Anzeigen einer Rückwärtsrichtung zu dem Simulationselement für das aktuelle Fahrzeug in dem Umgebungssimulationsdisplay und Präsentieren eines Wahrnehmungsverbesserungselements zum Anzeigen, dass eine Vorwärtsfahrrichtung in dem Umgebungssimulationsdisplay in einem unverfügbaren Zustand ist, um dem Benutzer eine Fahrrichtung des aktuellen Fahrzeugs zu präsentieren.

7. Verfahren nach einem der Ansprüche 1 bis 4, wobei das genannte Ausführen der anderen Schnittstellenanzeigesteuerung als Reaktion auf den Szenenwechsel, um dem Benutzer Informationen über den Szenenwechsel zu präsentieren (102), Folgendes beinhaltet:
Präsentieren, wenn eine zu durchfahrende Straßenkreuzung erkannt wird, eines Wahrnehmungsverbesserungselements in dem Umgebungssimulationsdisplay, um eine Position der zu durchfahrenden Straßenkreuzung anzuzeigen, um dem Benutzer die Position der zu durchfahrenden Straßenkreuzung anzuzeigen (702).

8. Verfahren nach einem der Ansprüche 1 bis 4, wobei das genannte Ausführen der anderen Schnittstellenanzeigesteuerung als Reaktion auf den Szenenwechsel, um dem Benutzer Informationen über den Szenenwechsel zu präsentieren (102), Folgendes beinhaltet:
Justieren, wenn ein zu umfahrendes Hindernis erkannt wird, eines Wahrnehmungsverbesserungselements zum Führen des Fahrzeugs in dem Umgebungssimulationsdisplay, um dem Benutzer eine Fahrführung gegen das Hindernis bereitzustellen (802); und/oder
Präsentieren, wenn ein zu umfahrendes Hindernis erkannt wird, eines Wahrnehmungsverbesserungselements zum Anzeigen des Hindernisses in dem Umgebungssimulationsdisplay, um dem Benutzer eine Position des Hindernisses anzuzeigen.

9. Verfahren nach einem der Ansprüche 1 bis 4, wobei das genannte Durchführen der anderen Schnittstellenanzeigesteuerung als Reaktion auf den Szenenwechsel, um dem Benutzer Informationen über den Szenenwechsel zu präsentieren (102), Folgendes beinhaltet:
Präsentieren, wenn ein Einparkweg zum Zielparkplatz erfolgreich erzeugt wurde, eines Wahrnehmungsverbesserungselements im Umgebungssimulationsdisplay, um eine Stoppposition anzuzeigen, an der das aktuelle Fahrzeug gestoppt werden soll, um dem Benutzer eine Zielposition anzuzeigen, an der das aktuelle Fahrzeug gestoppt werden soll (902).

10. Verfahren nach Anspruch 1, das ferner Folgendes beinhaltet:
Präsentieren, wenn das aktuelle Fahrzeug in der Zielparklücke geparkt wurde, einer Übersichtskarte und während des autonomen Fahrens gesammelter kumulativer Fahrinformationen, um dem Benutzer Informationen während des Betriebs im autonomen Fahrmodus zu präsentieren.

11. Interaktionsvorrichtung für autonomes Fahren, **gekennzeichnet durch**:
ein Autonomer-Fahrmodus-Aktivierungsmodul (1001), konfiguriert zum Bereitstellen, einem Benutzer, eines Mittels zum Aktivieren eines autonomen Fahrmodus, wobei das Mittel aus verschiedenen Mitteln ausgewählt wird, je nachdem, ob eine Parkschnittstelle aktiviert ist, und zum Aktivieren des autonomen Fahrmodus als Reaktion auf eine Bestätigung vom Benutzer über die bereitgestellten Mittel (101);
ein Szenenwechsel-Feedbackmodul (1002), konfiguriert zum Folgen einem zuvor erlernten Einparkweg während des autonomen Fahrens und zum Durchführen, als Reaktion auf einen Szenenwechsel, einer anderen Schnittstellenanzeigesteuerung, um dem Benutzer Informationen über den Szenenwechsel zu präsentieren (102); und
ein Einparkmodul (1003), konfiguriert zum Durchführen, wenn ein im Einparkweg aufgezeichneter Zielparkplatz erreicht ist, von automatischem Einparken in den Zielparkplatz (103).

12. Fahrzeug, das Folgendes umfasst:
einen Prozessor,
einen Speicher und
ein auf dem Speicher gespeichertes und vom Prozessor ausführbares Computerprogramm, das bei Ausführung durch den Prozessor das Interaktionsverfahren für autonomes Fahren nach einem der Ansprüche 1 bis 10 implementiert.

13. Computerlesbares Speichermedium, auf dem ein Computerprogramm gespeichert ist, das bei Ausführung durch einen Prozessor das Interaktionsverfahren für autonomes Fahren nach einem der Ansprüche 1 bis 10 implementiert.

## Revendications

1. Procédé d'interaction pour une conduite autonome, **caractérisé par** :
une fourniture à un utilisateur d'un moyen pour activer un mode de conduite autonome, le moyen étant sélectionné parmi différents moyens sur la base de l'activation ou non d'une interface de stationnement, et une activation du mode de conduite autonome en réponse à une confirmation provenant de l'utilisateur au moyen du moyen fourni (101) ;
un suivi d'un trajet de stationnement préalablement appris pendant la conduite autonome, et une exécution d'une commande d'affichage d'interface différent en réponse à un changement de scénario afin de présenter des informations concernant le changement de scénario à l'utilisateur (102) ; et
lorsqu'une place de stationnement cible enregistrée dans le trajet de stationnement est atteinte, une exécution d'un stationnement automatisé dans la place de stationnement cible (103).

2. Procédé selon la revendication 1, dans lequel ladite activation du mode de conduite autonome (101) comprend :
lorsque l'interface de stationnement n'est pas activée, une présentation, sur un affichage d'un système embarqué dans le véhicule, d'un élément visuel contenant un indicateur qu'une entrée dans une zone dans laquelle la conduite autonome est disponible a été réalisée, et un envoi d'un message vocal contenant un indicateur que le mode de conduite autonome peut être activé, afin d'indiquer à l'utilisateur que le mode de conduite autonome peut être activé (201) ; et
une activation du mode de conduite autonome en réponse à une interaction d'action avec l'élément visuel contenant l'indicateur qu'une entrée dans la zone dans laquelle la conduite autonome est disponible a été réalisée, ou en réponse à une interaction vocale avec le message vocal contenant l'indicateur que le mode de conduite autonome peut être activé (202).

3. Procédé selon la revendication 1, dans lequel ladite activation du mode de conduite autonome (101) comprend :
lorsque l'interface de stationnement est activée, une présentation d'un élément d'interface pour démarrer la conduite autonome dans l'interface de stationnement afin d'être dans un état opérable, afin d'indiquer à l'utilisateur que le mode de conduite autonome peut être activé (301) ; et
une activation du mode de conduite autonome en réponse à une interaction d'action avec l'élément d'interface pour démarrer la conduite autonome (302).

4. Procédé selon la revendication 1, dans lequel ladite activation du mode de conduite autonome (101) comprend :
lorsque l'interface de stationnement est activée, une présentation d'un élément d'interface pour un stationnement à distance dans l'interface de stationnement lorsqu'il est détecté qu'une distance entre un véhicule courant et la place de stationnement cible est inférieure à une distance prédéfinie, afin d'indiquer à l'utilisateur que le mode de conduite autonome peut être activé au moyen du stationnement à distance (401) ; et
en réponse à une opération sur l'élément d'interface pour le stationnement à distance, une présentation d'un élément visuel contenant un guide pour le stationnement à distance, et une activation du mode de conduite autonome au moyen d'une opération effectuée sur une clé de véhicule à l'extérieur du véhicule (402).

5. Procédé selon l'une quelconque des revendications 1 à 4, dans lequel ladite exécution d'une commande d'affichage d'interface différent en réponse au changement de scénario afin de présenter des informations concernant le changement de scénario à l'utilisateur (102) comprend :
lorsqu'il est détecté que le véhicule est sur le point de réaliser un virage, un ajustement d'une vue d'affichage d'un affichage de simulation d'environnement dans une interface de conduite autonome, afin de fournir à l'utilisateur une vue de la courbe dans un environnement (502).

6. Procédé selon l'une quelconque des revendications 1 à 4, dans lequel ladite exécution de la commande d'affichage d'interface différent en réponse au changement de scénario afin de présenter des informations concernant le changement de scénario à l'utilisateur (102) comprend :
lorsqu'il est détecté que le véhicule courant est placé en marche arrière, un affichage proéminent d'une vue d'image panoramique dans l'interface de conduite autonome, afin de présenter des environs du véhicule courant à l'utilisateur en temps réel (602) ; et/ou lorsqu'il est détecté que le véhicule courant est placé en marche arrière, une présentation d'un élément de simulation pour le véhicule courant avec un feu de freinage étant allumé dans l'affichage de simulation d'environnement, afin d'indiquer à l'utilisateur que le véhicule courant est en marche arrière ; et/ou
lorsqu'il est détecté que le véhicule courant est placé en marche arrière, un ajout d'un élément d'amélioration de perception pour indiquer une direction de marche arrière à l'élément de simulation pour le véhicule courant dans l'affichage de simulation d'environnement, et une présentation d'un élément d'amélioration de perception pour indiquer qu'une direction de conduite vers l'avant dans l'affichage de simulation d'environnement est dans un état indisponible, afin de présenter une direction de conduite du véhicule courant à l'utilisateur.

7. Procédé selon l'une quelconque des revendications 1 à 4, dans lequel ladite exécution de la commande d'affichage d'interface différent en réponse au changement de scénario afin de présenter des informations concernant le changement de scénario à l'utilisateur (102) comprend :
lorsqu'un carrefour à traverser est détecté, une présentation, dans l'affichage de simulation d'environnement, d'un élément d'amélioration de perception pour indiquer une position du carrefour à traverser, afin d'indiquer à l'utilisateur la position du carrefour à traverser (702).

8. Procédé selon l'une quelconque des revendications 1 à 4, dans lequel ladite exécution de la commande d'affichage d'interface différent en réponse au changement de scénario afin de présenter des informations concernant le changement de scénario à l'utilisateur (102) comprend :
lorsqu'un obstacle à contourner est détecté, un ajustement d'un élément d'amélioration de perception pour guider le véhicule dans l'affichage de simulation d'environnement, afin de fournir à l'utilisateur un guidage de conduite par rapport à l'obstacle (802) ; et/ou lorsqu'un obstacle à contourner est détecté, une présentation d'un élément d'amélioration de perception pour indiquer l'obstacle dans l'affichage de simulation d'environnement, afin d'indiquer à l'utilisateur une position de l'obstacle.

9. Procédé selon l'une quelconque des revendications 1 à 4, dans lequel ladite exécution de la commande d'affichage d'interface différent en réponse au changement de scénario afin de présenter des informations concernant le changement de scénario à l'utilisateur (102) comprend :
lorsqu'un trajet d'entrée en stationnement vers la place de stationnement cible est généré avec succès, une présentation, dans l'affichage de simulation d'environnement, d'un élément d'amélioration de perception pour indiquer une position d'arrêt où le véhicule courant doit être arrêté, afin d'indiquer à l'utilisateur une position cible où le véhicule courant doit être arrêté (902).

10. Procédé selon la revendication 1, comprenant en outre :
lorsque le véhicule courant a été stationné dans la place de stationnement cible, une présentation d'une carte d'ensemble et d'informations de conduite cumulatives collectées pendant la conduite autonome, afin de présenter à l'utilisateur des informations pendant un fonctionnement dans le mode de conduite autonome.

11. Appareil d'interaction pour une conduite autonome, **caractérisé par** :
un module d'activation de mode de conduite autonome (1001), configuré pour fournir à un utilisateur un moyen pour activer un mode de conduite autonome, le moyen étant sélectionné parmi différents moyens sur la base de l'activation ou non d'une interface de stationnement, et activer le mode de conduite autonome en réponse à une confirmation provenant de l'utilisateur au moyen du moyen fourni (101) ;
un module de retour d'information de changement de scénario (1002), configuré pour suivre un trajet de stationnement préalablement appris pendant la conduite autonome, et exécuter une commande d'affichage d'interface différent en réponse à un changement de scénario afin de présenter des informations concernant le changement de scénario à l'utilisateur (102) ; et
un module de stationnement (1003), configuré pour, lorsqu'une place de stationnement cible enregistrée dans le trajet de stationnement est atteinte, exécuter un stationnement automatisé dans la place de stationnement cible (103).

12. Véhicule, comprenant :
un processeur,
une mémoire, et
un programme informatique stocké sur la mémoire et exécutable par le processeur qui, lorsqu'il est exécuté par le processeur, met en œuvre le procédé d'interaction pour une conduite autonome selon l'une quelconque des revendications 1 à 10.

13. Support de stockage lisible par ordinateur sur lequel est stocké un programme informatique qui, lorsqu'il est exécuté par un processeur, met en œuvre le procédé d'interaction pour une conduite autonome selon l'une quelconque des revendications 1 à 10.
